# EUROPÄISCHE PATENTSCHRIFT

(11) **EP 2 492 041 B1**
(45) Veröffentlichungstag und Bekanntmachung des Hinweises auf die Patenterteilung: **14.01.2015**
(21) Anmeldenummer: 11155941.5
(22) Anmeldetag: 25.02.2011
(51) Int. Cl.: B23K 26/38, B23K 37/02, B23K 37/047, B23K 37/053, B23Q 1/76, B23Q 7/04

(54) **Flexible Vorrichtung mit einer Rohrbearbeitungsvorrichtung ; Verfahren zum Entladen eines Rohres unter Verwendung einer solchen Vorrichtung**
Flexible device with a pipe processing device ; Method of unloading a pipe using such device
Dispositif avec un dispositif d'usinage de tuyau ; Méthode de déchargement d'un tuyau utilisant un tel dispositif

(43) Veröffentlichungstag der Anmeldung: 29.08.2012
(73) Patentinhaber: TRUMPF Werkzeugmaschinen GmbH + Co. KG, 71254 Ditzingen (DE)
(72) Erfinder: Schopf, Ralf, 71254 Ditzingen (DE); Reinwald, Simon, 75365 Calw-Hirsau (DE); Kettner-Reich, Andreas, 70469 Stuttgart (DE)
(74) Vertreter: Kohler Schmid Möbus

(56) Entgegenhaltungen:
- EP-A1- 2 017 023
- EP-A2- 1 002 622
- WO-A2-2005/014223
- DE-A1-102008 016 733
- FR-A1- 2 792 864
- US-A1- 2008 135 531

## Beschreibung

Die vorliegende Erfindung betrifft eine Vorrichtung gemäß dem Oberbegriff des Anspruchs 1 (siehe, z.B, DE 10 2008 016733 A), mit einer Bearbeitungs vorrichtung zur Bearbeitung von Rohren, sowie ein Verfahren zum Entladen eines Rohrs mittels einer solchen Vorrichtung.

Unter einem Rohr wird im Rahmen dieser Anmeldung ein länglicher Körper (ein längliches Werkstück) verstanden, dessen Länge in der Regel wesentlich größer als sein Querschnitt ist und der aus einem im Wesentlichen unflexiblen Material gefertigt ist. Rohre können eine beliebige offene oder geschlossene Querschnittsform aufweisen, wobei Rund- und Rechteckrohre die gebräuchlichsten Rohre darstellen. Rohrförmige Bauteile, die aus Rohren durch Laserschneiden hergestellt werden, werden im Rahmen dieser Anmeldung als Rohrteile bezeichnet.

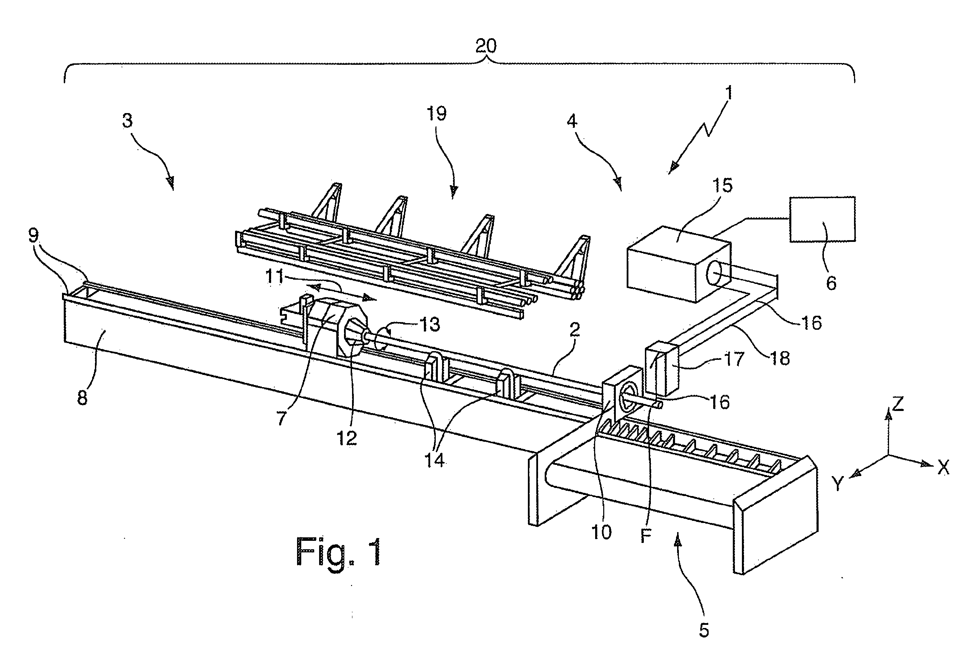

Fig. 1 zeigt eine als "TruLaser Tube" bekannte Bearbeitungsanlage **1** zum Laserschneiden von Rohren **2,** die als Laserschneidanlage bezeichnet wird und zur Bearbeitung von Rohren mit einer beliebigen Querschnittsform ausgebildet ist. Die gezeigte Laserschneidanlage 1 umfasst eine Zuführvorrichtung **3** zur seitlichen Zufuhr eines zu schneidenden Rohrs 2 zu der Laserschneidanlage 1, eine Bearbeitungsvorrichtung **4** zum Laserschneiden von Rohrteilen aus dem Rohr 2 und eine Entladevorrichtung **5** zum Entladen der geschnittenen Rohrteile aus der Laserschneidanlage 1. Alle wesentlichen Funktionen der Laserschneidanlage 1 werden mittels einer numerischen Steuerungsvorrichtung **6** gesteuert.

Die Zuführvorrichtung 3 umfasst eine als Werkstück-Bewegungseinrichtung dienende Dreh- und Vorschubeinrichtung 7 sowie ein Maschinenbett **8** mit Führungsschienen **9** und eine Durchschiebeeinrichtung **10.** Die Dreh- und Vorschubeinrichtung 7 ist motorisch angetrieben in Vorschubrichtung **11** auf den Führungsschienen 9 verfahrbar. An der einem zuzuführenden Rohr 2 zugewandten Seite weist die Dreh- und Vorschubeinrichtung 7 eine Spanneinrichtung **12** auf, die in Richtung des Doppelpfeils **13** gesteuert drehbar ist und das zugeführte Rohr 2 von außen umfasst und ortsfest klemmt. Das zugeführte Rohr 2 wird von mindestens einer in das Maschinenbett 8 integrierten Werkstückabstützung **14** abgestützt. Im Bereich der Bearbeitungsvorrichtung 4 wird das Rohr 2 durch die Durchschiebeeinrichtung 10 geführt. Die Durchschiebeeinrichtung 10 ist so ausgelegt, dass das eingespannte Rohr 2 in Vorschubrichtung 11 geführt und nicht ortsfest geklemmt ist. Das Rohr 2 ist in der Durchschiebeeinrichtung 10 um die Drehachse 13 drehbar.

Die Bearbeitungsvorrichtung 4 umfasst eine Laserstrahlquelle **15** zum Erzeugen eines Laserstrahls **16,** einen Bearbeftungskopf **17** und eine Strahlführung **18,** die den Laserstrahl 16 von der Laserstrahlquelle 15 zum Bearbeitungskopf 17 führt. Der Laserstrahl 16 tritt aus dem Bearbeitungskopf 17 aus und wird an einer Bearbeitungsstelle F auf die Außenumfangsfläche des eingespannten Rohrs 2 fokussiert. Auf der dem Maschinenbett 8 abgewandten Seite der Durchschiebeeinrichtung 10 ist die Entladevorrichtung 5 vorgesehen, die die aus dem Rohr 2 geschnittenen Rohrteile sowie das Restrohr aus der Laserschneidanlage 1 abführt.

Um die Produktivität der Laserschneidanlage 1 zu erhöhen, weist die in Fig. 1 gezeigte Laserschneidanlage 1 eine Beladevorrichtung **19** als Automatisierungskomponente auf, mit der ein Rohr 2 automatisch in eine Übergabeposition befördert und an die Zuführvorrichtung 3 der Laserschneidanlage 1 übergeben wird. Die maschinelle Anordnung aus Laserschneidanlage 1 und der Beladevorrichtung 19 wird als Fertigungszelle **20** bezeichnet.

Wenn das über die Beladevorrichtung 19 zugeführte Rohr 2 in der Übergabeposition angeordnet ist, befindet sich die Dreh- und Vorschubeinrichtung 7 zunächst in einer bearbeitungskopffernen Ausgangsstellung. Zur Rohrbearbeitung verfährt die Dreh- und Vorschubeinrichtung 7 aus ihrer Position mit geöffneter Spanneinrichtung 12 so weit in Richtung auf das zugeführte Rohr 2 zu, bis das dem Bearbeitungskopf 17 abgewandte Ende des Rohrs 2 innerhalb der Spanneinrichtung 12 zu liegen kommt. Die Spanneinrichtung 12 wird geschlossen und dadurch das Rohr 2 an der Dreh- und Vorschubeinrichtung 7 ortsfest geklemmt. Die Dreh- und Vorschubeinrichtung 7 und das Rohr 2 bewegen sich gemeinsam in Richtung auf den Bearbeitungskopf 17. Dabei läuft das Rohr 2 mit seinem dem Bearbeitungskopf 17 zugewandten Ende zunächst in die Durchschiebeeinrichtung 10 ein und wird in Vorschubrichtung 11 durch die Durchschiebeeinrichtung 10 hindurch bewegt, wobei das Rohr 2 in der Durchschiebeeinrichtung 10 um die Drehachse 13 drehbar ist. Das Rohr 2 wird durch die Verfahrbewegung der Dreh- und Vorschubeinrichtung 7 in Vorschubrichtung 11 gegenüber dem Bearbeitungskopf 17 in die gewünschte Bearbeitungsposition zugestellt.

Für das Entladen der bearbeiteten Werkstücke aus einer Rohrschneidmaschine wurden verschiedene Entladevorrichtungen vorgeschlagen. Die als "TruLaser Tube 7000" bekannte Bearbeitungsanlage 1 weist eine Ausschleusstation mit einem schwenkbaren Entladetisch mit Aussparungen auf, in denen sich absenkbare Fertigteilunterstützungen befinden, auf denen lange Rohre während der Bearbeitung aufliegen.

Aus der EP901874A2 ist es bekannt, in einer Rohrschneidmaschine einen gesteuert entlang der Maschinenlängsachse verfahrbaren Wagen anzuordnen, der zum Zuführen und zum Entladen der rohrförmigen Werkstücke dient. Der Wagen weist steuerbare Greifer zur Aufnahme der Rohre auf.

Aus der DE10249106B4 ist es bekannt, in einer Rohrschneidmaschine einen gesteuert verfahrbaren Wagen anzuordnen, der verschiedene Hilfseinrichtungen (z.B. Stützrollen zur Rohrunterstützung oder eine bewegliche Entladeklappe) tragen kann, um die zu bearbeitenden oder die fertig bearbeiteten Rohre zu stützen, zu führen oder auszuwerfen.

Aus der EP1026128B1 ist eine Vorrichtung bekannt geworden, welche eine Aufnahme- und Abführeinrichtung für Rohre mit einer aus zwei Auflagerohren gebildeten Zangenwalze aufweist. Um abgetrennte Rohrteile ohne mechanische Belastung zu einer Transporteinrichtung zu überstellen, ist die Aufnahme- und Abführeinrichtung mit Federblechen versehen, welche die abgetrennten Rohrabschnitte in prismatische Aufnahmen der Transporteinrichtung leiten.

In der US 6335508B1 ist ein Rohrhandhabungssystem beschrieben, mittels dessen eine Laserbearbeitungsanlage zur Bearbeitung von flachen Werkstücken in eine Rohrbearbeitungsanlage umgewandelt werden kann. Das Rohrhandhabungssystem weist zwei in Rohrlängsrichtung verschiebbare Schlitten auf, von denen der erste zum Klemmen des Rohres und der zweite zum Abstützen des Rohres dient. Der zweite Schlitten weist einen Greifer auf, um das Rohr ebenfalls festzuklemmen, so dass dieses in einer gemeinsamen Verschiebebewegung mit dem ersten Schlitten in Rohrlängsrichtung verschoben werden kann.

### Aufgabe der Erfindung

Es ist die Aufgabe der vorliegenden Erfindung, eine Vorrichtung für eine Rohrbearbeitungsmaschine, sowie ein Verfahren zum Entladen eines Rohrs mittels einer solchen Vorrichtung bereitzustellen, die auf einfache Weise das Entladen von Rohren unterschiedlicher Länge und insbesondere eine Sortierung der Rohre ermöglichen.

### Gegenstand der Erfindung

Die Erfindung wird durch eine Vorrichtung gemäß Anspruch 1 definiert.

Bei der erfindungsgemäßen Vorrichtung können der bzw. die Stützkörper und/oder die Ablagefläche nicht nur in Rohrlängsrichtung, sondern in mindestens einer weiteren Richtung (gesteuert) verfahren werden. Die Bewegung in der weiteren Richtung erfolgt dabei entweder durch Verfahren des Ablage- oder des Stützschlittens als Ganzes oder dadurch, dass die Ablagefläche bzw. der Stützkörper relativ zum tragenden Ablage- bzw. Stützschlitten verfahren werden. Die Ablagefläche oder der Stützkörper sind während der Bearbeitung eines Rohres unterhalb des abzulegenden bzw. zu stützenden Rohres positioniert. Durch das Verfahren in mindestens einer anderen Richtung als der Rohrlängsrichtung wird eine Kollision zwischen dem Stützschlitten bzw. dessen Stützkörper und dem Ablageschlitten bzw. dessen Anlagefläche vermieden, wenn beide Schlitten in Rohrlängsrichtung aneinander vorbei bewegt werden sollen. Erfolgt die Ausweichbewegung eines Schlittens quer zur Rohrlängsrichtung bzw. zur Maschinenachse, so sind die Ablagefläche und der Stützkörper bzw. der Ablageschlitten und der Stützschlitten auch in Rohrlängsrichtung nebeneinander positionierbar. Somit können wahlweise der Ablageschlitten oder der bzw. die Stützschlitten direkt im Anschluss an die Bearbeitungsstelle (im Bereich des Bearbeitungskopfes) angeordnet werden und ein dort befindliches Rohr bzw. Rohrteil abstützen.

Auf diese Weise können kurze Rohrteile ohne Unterstützung durch einen sich auf der Fertigteilseite befindenden Stützkörper bearbeitet und nach der Bearbeitung auf dem Ablageschlitten abgelegt werden, der zu diesem Zweck direkt neben der Bearbeitungsstelle positioniert wird. Auch Restrohre können mit dem Ablageschlitten entladen werden. Bei der Bearbeitung und zum Entladen von langen Rohrteilen können diese durch mindestens zwei der Stützschlitten mit Stützkörpern abgestützt werden, von denen einer in der Nähe der Bearbeitungsstelle positioniert ist.

Die erfindungsgemäße Vorrichtung ermöglicht somit sowohl das Stützen und die Führung langer Rohrteile während der Bearbeitung, d. h. bei Drehung und Längsvorschub des Rohrs bzw. Rohrteils, sowie das Entladen und Sortieren von Werkstückteilen unterschiedlicher Länge. Abgetrennte Rohrteile können sowohl durch den Ablageschlitten als auch durch die Stützschlitten direkt an der Bearbeitungsstelle ausgeschleust oder an mindestens eine weitere Position in Längsrichtung der Entladevorrichtung transportiert und dort entladen werden, wie weiter unten näher beschrieben wird.

Bei einer Ausführungsform sind der Ablageschlitten und der mindestens eine Stützschlitten an Führungsschienen eines sich in Rohrlängsrichtung erstreckenden (Längs-)Trägers angebracht. Die Führungsschienen ermöglichen eine besonders einfache und damit kostengünstige Führung. Mit Hilfe von steuerbaren Antrieben können der Ablageschlitten bzw. die Stützschlitten entlang der Führungsschienen unabhängig voneinander gesteuert bewegt werden und in einer gewünschten Position entlang des Trägers zugestellt werden, um dort ein Rohr bzw. Rohrteil zu unterstützen. Es versteht sich, dass solche Führungsschienen auch direkt auf dem Boden der Maschinenhalle angebracht werden können, so dass der Ablageschlitten und der mindestens eine Stützschlitten direkt auf dem Boden verfahrbar sind. Eine Ausweichbewegung kann in diesem Fall z.B. an einer Verzweigung einer der

Führungsschienen realisiert werden, an weicher der Ablageschlitten oder der mindestens eine Stützschlitten entlang eines abzweigenden Führungsschienenabschnitts, der in einer von der Rohrlängsrichtung abweichenden Richtung verläuft, bewegt werden kann.

In einer Weiterbildung sind der Ablageschlitten und der mindestens eine Stützschlitten an gegenüberliegenden Seiten des Trägers angebracht. In diesem Fall verlaufen die Führungsschienen zur Führung des Ablageschlittens und die Führungsschienen zur Führung der Stützschlitten an gegenüberliegenden Seiten des Trägers, wodurch eine Kollision des Ablageschlittens mit den Stützschliten im Bereich der Führungsschienen verhindert werden kann. Es versteht sich, dass die Führungsschienen auch an derselben Seite des Trägers angebracht werden können. In diesem Fall ist es allerdings erforderlich, dass die Führungsschienen auf unterschiedlichen Höhen und in einem ausreichenden Abstand voneinander angeordnet sind, um Kollisionen zwischen dem Ablageschlitten und dem bzw. den Stützschlitten zu verhindern.

In einer Ausführungsform weist der Ablageschlitten einen Ausleger zum Verfahren der Ablagefläche des Ablageschlittens quer zur Rohrlängsrichtung bzw. zur Maschinenachse auf. Die Ablagefläche kann in diesem Fall von der Maschinenlängsachse weg verfahren werden, wenn die Stützschlitten, welche die Stützkörper tragen, neben der Bearbeitungsstelle positioniert werden sollen, sodass Kollisionen auf besonders einfache Weise verhindert werden können.

Bei einer weiteren Ausführungsform ist die Ablagefläche des Ablageschlittens höhenverstellbar. In diesem Fall können der bzw. die Stützschlitten unter der Ablagefläche hindurch bewegt werden, oder umgekehrt. Auch kann die Höhenverstellung der Ablagefläche, welche z.B. durch die Anbringung der Ablagefläche an einem gesteuert in der Höhe verstellbaren Schlitten realisiert werden kann, dazu verwendet werden, um die Ablagefläche an den Hüllkreis des Rohrs anzustellen, welches von der Ablagefläche unterstützt werden soll.

Die Ablagefläche kann hierbei insbesondere prismatisch ausgebildet sein, d.h. von einer den Scheitel der Ablagefläche bildenden, sich in Rohrlängsrichtung erstreckenden Kante ausgehend quer zur Rohrlängsrichtung zu beiden Seiten hin ansteigen, sodass ein seitliches Wegrollen oder Wegrutschen von aufliegenden Rohrteilen verhindert wird.

In einer weiteren Ausführungsform ist die Ablagefläche des Ablageschlittens zwischen einer ersten, horizontalen Stellung zur Ablage des Rohres und einer zweiten, geneigten Stellung zum Ausschleusen des Rohres verschwenkbar. Zur Verschwenkung zwischen den beiden Stellungen kann eine Verschwenkeinrichtung z.B. in Form eines Hydraulik- oder Pneumatik-Zylinders dienen, dessen Kolben an einem freien Ende der Ablagefläche angreift.

In einer Ausführungsform ist der Stützkörper des Stützschlittens höhenverstellbar und der Stützschlitten weist mindestens eine geneigte, seitlich zum Stützkörper versetzte Ausschleusleiste auf. Beim Einsatz mehrerer Stützschlitten weist mindestens einer der Stützschlitten je eine Ausschleusleiste in Rohrlängsrichtung vor sowie hinter dem Stützkörper auf, während die übrigen Stützschlitten nur eine Ausschleusleiste aufweisen können. Wird der Stützkörper weit genug abgesenkt, liegt das Rohr bzw. Rohrteil nicht mehr auf dem Stützkörper, sondern auf den Ausschleusleisten auf und kann an diesen entlang gleiten bzw. entlang rollen und von dort in einen neben dem Maschinenbett angeordneten Behälter oder an eine dort angeordnete Transporteinrichtung (z.B. auf ein Transportband) verbracht werden. Die Höhenverstellbarkeit des Stützkörpers ermöglicht es auch, eine Anpassung an den Hüllkreis des zu stützenden Rohres bzw. Rohrteils vorzunehmen. Der Stützkörper kann insbesondere als feststehende Formschale oder als drehbar gelagerte Stützrolle ausgeführt sein, wobei letztere eine Relativbewegung zwischen dem Rohr bzw. Rohrteil und dem Stützschlitten in Rohrlängsrichtung ermöglicht, die bei der Ablagefläche des Ablageschlittens oder bei der Formschale nicht gegeben ist.

Bei einer Ausführungsform ist der Stützkörper in eine Zwischenstellung absenkbar, in der das Rohr auf der bzw. den Ausschleusleisten aufliegt und durch die Wand des Stützkörpers auf der bzw. den Ausschleusleisten gehalten wird, wobei die Wand des Stützkörpers bevorzugt einen geraden Rand zum Halten des Rohres in der Zwischenstellung aufweist. In der Zwischenstellung liegt das Rohr bzw. Rohrteil auf der bzw. den Ausschleusleisten auf, so dass das Rohr bzw. Rohrteil bei einer Bewegung des Stützschlittens in Rohrlängsrichtung die relative Lage zum Stützschlitten nicht verändern kann, da der Stützkörper keine Drehbewegung mehr ausführt. Ein Abrutschen des Rohrs bzw. Rohrteils entlang der Ausschleusleiste wird hierbei durch die Wand des Stützkörpers verhindert. Die Stabilität beim Halten des Rohrs bzw. Rohrteils auf der Ausschleusleiste kann verbessert werden, wenn die Wand einen sich an einen z.B. halbkreisförmigen Wandbereich zur radialen Abstützung anschließenden, in vertikaler Richtung verlaufenden Rand aufweist. Sind die Stützkörper in der Zwischenstellung angeordnet, können die Rohre bzw. Rohrteile entlang der Rohrlängsrichtung transportiert werden, beispielsweise um diese zur Sortierung unterschiedlichen Behältern zuzuführen.

In einer Weiterbildung ist eine Winkelstellung der Ausschleusleiste einstellbar und/oder die Ausschleusleiste ist mit einer insbesondere auswechselbaren Gleitschiene bestückt. Die Winkelstellung der Ausschleusleiste kann z.B. manuell in Abhängigkeit von der Rohrart (Querschnittsform bzw. Rohrdurchmesser) eingestellt werden. An der Ausschleusleiste kann eine Gleitschiene vorgesehen sein, entlang derer das Rohr bzw. Rohrteil entlang gleitet bzw. entlang rollt. Da die Gleitschienen Verschleißteile darstellen, sind diese in vorteilhafter Weise auswechselbar, beispielsweise durch eine Schraubverbindung, und können bei Bedarf ausgetauscht werden. Insbesondere können je nach Anwendung, z.B. je nach Rohrmaterial, Gleitschienen aus unterschiedlichen Materialien (Metall, Kunststoff, Textil, etc.) zum Einsatz kommen.

Bei einer weiteren Ausführungsform weist die Entladevorrichtung eine geneigte Entladefläche auf, welche sich quer zur Rohrlängsrichtung an die Ablagefläche und/oder an die Ausschleusleiste anschließt. Das obere Ende der geneigten Entladefläche ist hierbei auf einer Höhe angeordnet, welche mit der Höhe des unteren Endes der Ablagefläche in der geneigten Stellung bzw. der Ausschleusleiste(n) übereinstimmt, um Rohre bzw. Rohrteile in kontrollierter Weise in Sammelbehälter oder Transporteinrichtungen zu übergeben. Durch die (stationäre) Entladefläche wird verhindert, dass die Ablagefläche oder die Ausschleusleisten beim Verfahren in Rohrlängsrichtung mit schlecht positionierten Sammelbehältern kollidieren und ggf. dort verhaken.

Ein weiterer Aspekt der Erfindung betrifft ein Verfahren zum Entladen eines Rohrs mittels einer Vorrichtung wie oben beschrieben (siehe auch Anspruch 12) umfassend die Schritte: Wahlweises Positionieren des Ablageschlittens und/oder des Stützschlittens im Bereich einer Bearbeitungsstelle der Bearbeitungsvorrichtung durch Bewegen des Ablageschlittens und/oder des Stützschlittens in Rohrlängsrichtung, wobei zumindest die Ablagefläche des Ablageschlittens und/oder zumindest der Stützkörper des Stützschlittens in mindestens einer weiteren Richtung bewegt werden, um den Ablageschlitten und den Stützschlitten in Rohrlängsrichtung zumindest teilweise aneinander vorbei zu bewegen, sowie Ablegen des Rohrs auf der Ablagefläche des im Bereich der Bearbeitungsstelle positionierten Ablageschlittens oder auf dem Stützkörper des im Bereich der Bearbeitungsstelle positionierten Stützschlittens.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer konventionellen Bearbeitungsanlage zum Laserschneiden von Rohren,
- Fig. 2: eine schematische Darstellung einer Entladevorrichtung mit einem Ablageschlitten sowie drei Stützschlitten, die jeweils in Rohrlängsrichtung gesteuert verfahrbar sind,
- Fig. 3: eine schematische Darstellung der Entladevorrichtung von Fig. 2 mit einer Ablagefläche des Ablageschlittens in einer geneigten Stellung und mit einer geneigten Entladefläche,
- Fig. 4: eine Seitenansicht der Ablagefläche in der geneigten Stellung,
- Fig. 5: einen Ansicht des Stützschlittens von Fig. 2 mit einem rollenförmigen Stützkörper sowie mit seitlich zu diesem angebrachten Ausschleusleisten, und
- Fig. 6: einen Seitenansicht des rollenförmigen Stützkörpers von Fig. 5 in einer Zwischenstellung, bei welcher ein an diesem in radialer Richtung abgestütztes Rohr auf den Ausschleusleisten aufliegt.

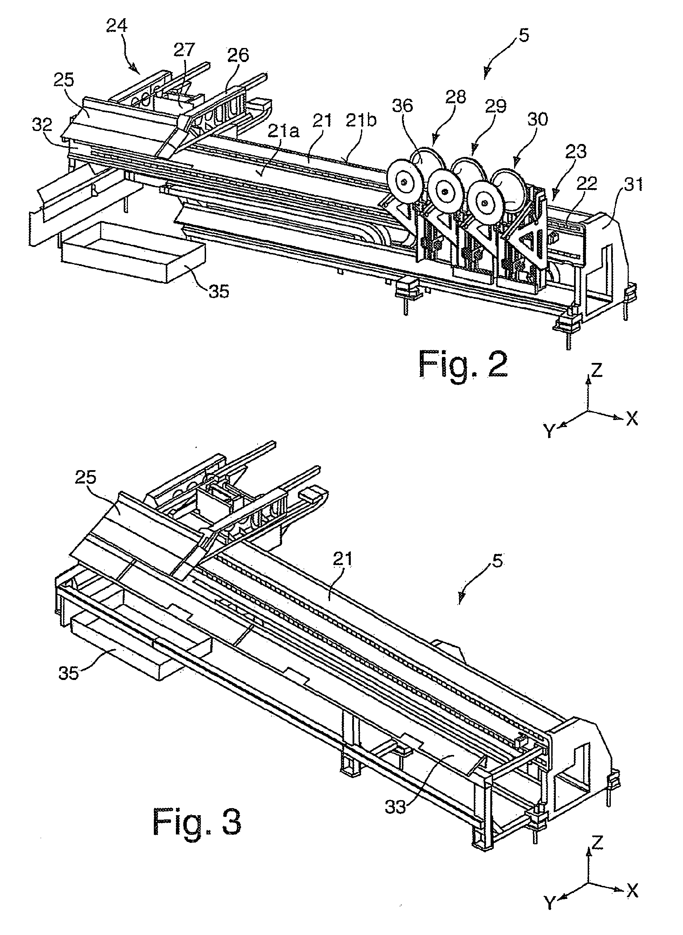

Fig. 2 zeigt schematisch eine Entladevorrichtung 5, die an Stelle der in Fig. 1 gezeigten Entladevorrichtung in der Laserschneidanlage 1 von Fig. 1 Verwendung findet. Die Entladevorrichtung 5 weist einen (Längs-)Träger 21 auf, welcher sich in Rohrlängsrichtung (X-Richtung eines XYZ-Koordinatensystems) an das Maschinenbett 8 (vgl, Fig. 1) .anschließt. An gegenüberliegenden Seiten 21a, 21b des Trägers 21 sind in Rohrlängsrichtung X verlaufende Führungsschienen 22, 23 vorgesehen, wobei die an der hinteren Seite 21 b des Trägers 21 angebrachten Führungsschienen 23 in Fig. 2 vom Träger 21 verdeckt sind.

An der Führungsschiene 23, welche an der dem (in Fig. 2 nicht gezeigten) Rohr abgewandten Seite 21 b des Trägers 21 angebracht ist, ist ein Ablageschlitten 24 in Rohrlängsrichtung X geführt, der mit einem (nicht gezeigten) Antrieb mittels der in Fig.1 gezeigten Steuerungsvorrichtung 6 ansteuerbar und gesteuert verschiebbar ist. Der Ablageschlitten 24 weist eine Ablagefläche **25** in Form eines prismatisch geformten Ablagetisches auf, der über einen Ausleger **26** in einer Richtung (Y-Richtung) quer zur Rohrlängsrichtung X über die Oberseite des Trägers 21 hinweg angestellt und zurückgezogen werden kann, so dass die Ablagefläche 25 nicht mehr in den Bereich der dem Rohr zugewandten Seite 21 a des Trägers 21 hinein ragt.

Der Querausleger 26 ist an einem Z-Schlitten **27** des Ablageschlittens 24 angebracht, welcher mit einem (nicht gezeigten) Antrieb verfahrbar ist, so dass die Ablagefläche 25 des Ablageschlittens 24 programmgesteuert (mittels der Steuerungsvorrichtung 6) in der Höhe (Z-Richtung) verfahren und so an den Durchmesser bzw. Hüllkreis der bearbeiteten Rohre angestellt werden kann. Eine dynamische Höhenanstellung abhängig von der Drehlage des bearbeiteten Rohrs bzw. Rohrteils ist hierbei ebenfalls möglich.

In Fig. 2 ebenfalls gezeigt sind drei Stützschlitten **28, 29, 30,** welche in Rohrlängsrichtung an einer Ruheposition an einem ersten, der Durchschiebeeinrichtung 10 abgewandten Ende 31 des Trägers 21 angeordnet sind. Die Stützschlitten 28 bis 30 sind an den Führungsschienen 22 an der dem Rohr zugewandten Seite 21 a des Trägers 21 angebracht und können von der Ruheposition aus an ein zweites Ende **32** des Trägers 21 in den Bereich einer benachbart zur Durchschiebeeinrichtung 10 befindlichen Bearbeitungsposition F angeordnet werden, wie weiter unten näher beschrieben wird. Die Stützschlitten 28 bis 30 sind hierbei mit Hilfe von (nicht gezeigten) Motoren getrennt voneinander ansteuerbar, so dass diese jeder für sich in Rohrlängsrichtung X verschoben werden können. Es versteht sich, dass die Stützschlitten 28 bis 30 auch synchron in Rohrlängsrichtung X verschoben werden können.

Die Ablagefläche 25 des in Fig. 2 gezeigten Ablageschlittens 24 ist zwischen einer ersten und einer zweiten Winkelstellung verschwenkbar. In einer ersten, waagrechten Stellung (in Fig. 2 nicht gezeigt) werden Rohrteile ohne Abrollen oder Abrutschen auf der Ablagefläche 25 abgelegt. Hierbei wird beim Abtrennen von Rohrteilen vom unbearbeiteten Rohr der Ablageschlitten 24 unter dem jeweils abzulegenden Rohrteil positioniert. Die prismatische, zu den Seiten hin ansteigende Ablagefläche 25 verhindert das seitliche Wegrollen oder Wegrutschen von aufliegende Rohren bzw. Rohrteilen. In der waagerechten Stellung auf der Ablagefläche 25 abgelegte Rohrteile können nachfolgend durch Verfahren des Ablageschlittens 24 in Rohrlängsrichtung X an eine andere Position entlang des Trägers 21 transportiert und dort von Hand oder durch Neigen der Ablagefläche 25 entladen werden (siehe unten). Auf diese Weise ist eine Sortierung von Teilen in verschiedene Behälter entlang des Maschinenbetts bzw. des Trägers 21 möglich.

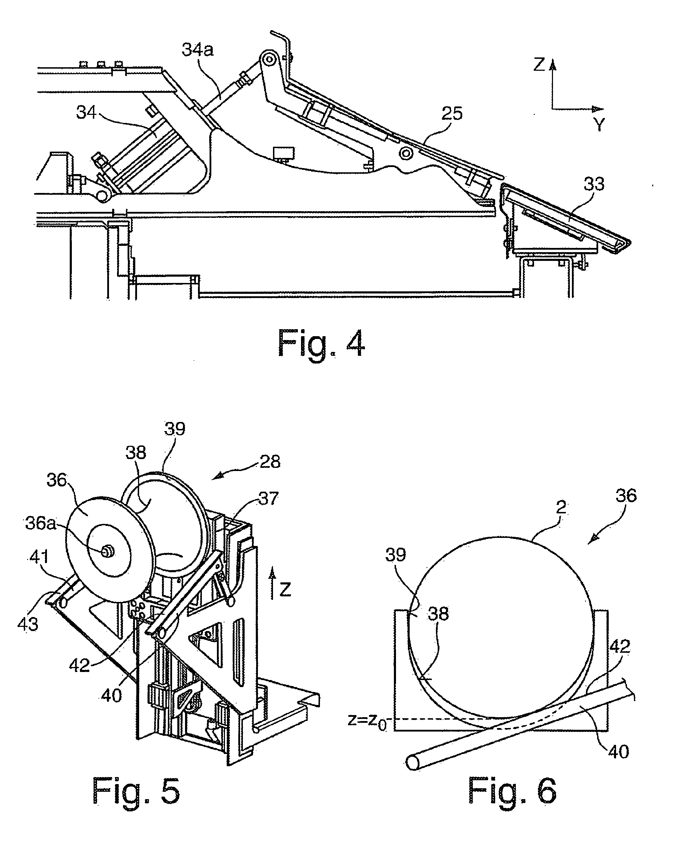

In der zweiten, geneigten Stellung der Ablagefläche 25, wie sie in Fig. 2 gezeigt ist, werden Rohrteile aufgenommen, die sogleich zur Seite (in Y-Richtung, d.h. quer zur Rohrlängsrichtung X), in einen (nicht gezeigten) Behälter oder auf ein Förderband rollen oder rutschen sollen. Um ein prozesssicheres Entladen der Rohrteile und eine definierte Übergabe an Sammelbehälter oder Transporteinrichtungen zu gewährleisten, ist am Maschinenbett eine in **Fig. 3** gezeigte, in einer Richtung Y quer zum Träger 21 versetzte, schräge Entladefläche **33** angebracht, welche sich in Rohrlängsrichtung X entlang des gesamten Trägers 21 erstreckt. Ein oberes Ende der Entladefläche 33 schließt sich hierbei an ein unteres Ende der Ablagefläche 25 in ihrer geneigten Stellung an (vgl. hierzu **Fig. 4****).**

Wie in Fig. 4 ebenfalls zu erkennen ist, dient ein Hydraulikzylinder **34** dazu, die Ablagefläche 25 aus der ersten, waagrechten Stellung in die zweite, geneigte Stellung zu verschwenken (und umgekehrt). Zu diesem Zweck ist ein freies Ende der Ablagefläche 25 mit einer Kolbenstange 34a des Hydraulikzylinders 34 bewegungsgekoppelt.

Die Entladefläche 33 dient z.B. dazu zu verhindern, dass die bewegte Ablagefläche 25 mit schlecht positionierten Sammelbehältern verhakt. Die schräge Entladefläche 33 ist typischer Weise mit ihrem unteren Ende in ihrer Höhe (Z-Richtung) so angeordnet, dass die Rohrteile ohne zusätzliche Hebeeinrichtungen in Euro-Gitterboxen (Ausschleushöhe 900mm) ausgeschleust werden können.

Zum Ausschleusen von kurzen Fertigteilen an unterschiedlichen Positionen entlang der Längsachse X der Entladevorrichtung 5 wird der Ablageschlitten 24 programmgesteuert in Rohrlängsrichtung X verfahren. Um einen möglichst großen Verfahrweg des Ablageschlittens 24 zu erreichen, werden hierbei die Stützschlitten 28 bis 30 wie in Fig. 2 gezeigt in der Ruhestellung am der Durchschiebeeinrichtung 10 bzw. dem Bearbeitungskopf 17 abgewandten Ende 31 des Trägers 21 positioniert.

Um bei der Bearbeitung entstehende Schrottteile und Schneidbutzen von den Rohrteilen zu trennen, sowie zum Entsorgen von Anschnitten und Restrohren kann die Ablagefläche 25 in Maschinenlängsrichtung X und/oder in Y-Richtung (quer zur Längsrichtung X) in einer gewissen Entfernung von der Bearbeitungsstelle F positioniert werden, so dass die Abfallteile nicht auf der Ablagefläche 25 abgelegt werden, sondern in einen an bzw. benachbart zur Bearbeitungsstelle F zwischen dem Träger 21 und der schrägen Entladefläche 33 angeordneten Behälter **35** verbracht werden können.

Während der Ablageschlitten 25 zur Ablage kleinerer Rohre bzw. Rohrteile dient, werden lange Rohre bzw. Rohrteile bei der Bearbeitung und beim Entladen durch mindestens zwei der Stützschlitten 28 bis 30 gestützt. Es versteht sich, dass in Abhängigkeit von der Länge der Rohre unterschiedlich viele Stützschlitten zum Einsatz kommen können. In der Regel werden mindestens zwei Stützschlitten benötigt. Nicht zur Unterstützung eines Rohrs bzw. Rohteils benötigte Stützschlitten können in der Ruheposition am ersten Ende 31 des Trägers 21 verbleiben.

Um eine Unterstützung durch mindestens zwei der Stützschliten 28 bis 30 zu erreichen, muss typischer Weise einer der Stützschlitten 28 in der Nähe der Bearbeitungsstelle F, d.h. nahe am zweiten Ende 32 des Trägers 21 positioniert werden. Hierzu ist es erforderlich, dass der Stützschliflen 28 in Rohrlängsrichtung X zumindest auf gleicher Höhe mit dem Ablageschlitten 24 positioniert bzw. an diesem vorbei bewegt wird.

Um eine Kollision zwischen der Ablagefläche 25 des Ablageschlittens 24 und dem Stützschlitten 28 bei der Bewegung in Rohrlängsrichtung X zu vermeiden, kann die Ablagefläche 25 mit Hilfe des Querauslegers 26 in eine zurückgezogene Position an der dem Rohr abgewandten Seite 21 b des Trägers 21 verbracht werden, d.h. die Ablagefläche 25 wird in Y-Richtung von der Maschinenlängsachse weg verfahren, wenn der Stützschlitten 28 in Rohrlängsrichtung X nahe an die Bearbeitungsstelle bewegt wird. Es versteht sich, dass alternativ die Ablagefläche 25 bzw. der Querausleger 26 mittels des Z-Schlittens auch in die Höhe (in Z-Richtung) verfahren werden kann, so dass der bzw. die Stützschlitten 28 bis 30 unter dem Ablageschlitten 24 hindurch bewegt werden können. In diesem Fall ist es in der Regel erforderlich, den Ablageschlitten 24 in Rohrlängsrichtung X zunächst von der Bearbeitungsstelle weg zu verschieben, um ein Verhaken bzw. eine Kollision der Ablagefläche 25 mit dem zu bearbeitenden Rohr zu verhindern.

Eine Kollision mit der Ablagefläche 25 kann auch verhindert werden, wenn ein Stützkörper 36 in Form einer Stützrolle, wie er in Fig. 5 und Fig. 6 für den ersten Stützschlitten 28 gezeigt ist, gesteuert nach unten (in Z-Richtung) abgesenkt wird. Zu diesem Zweck ist der Stützkörper 36 an einem Z-Schlitten 37 angebracht und mittels eines (nicht gezeigten) Motors gesteuert verschiebbar.

Mit Hilfe der Steuerungsvorrichtung 6 ist jeder der Stützschlitten 28 bis 30 unabhängig von den übrigen Stützschlitten 28 bis 30 programmiert verfahrbar, und zwar sowohl was die Höhenrichtung (Z-Position) des Stützkörpers 36 als auch was die Position des jeweiligen Stützschlittens 28 bis 30 in Rohrlängsrichtung X betrifft. Es versteht sich, dass die Stützschlitten 28 bis 30 bzw. deren Stützkörper 36 auch synchron in beiden Richtungen (X- bzw. Z-Richtung) verfahren werden können. Auch können an einem Stützschlitten 28 bis 30 zwei oder mehr Stützkörper zur Unterstützung eines Rohres bzw. Rohrteils vorgesehen werden.

Neben dem Absenken zur Vermeidung einer Kollision mit der Ablagefläche 25 des Ablageschlittens 24 ist ein Verfahren des Stützkörpers 36 in Z-Richtung auch zur Anpassung an den Hüllkreis bzw. Durchmesser eines im vorliegenden Beispiel kreisförmigen Rohres 2 möglich, das von dem Stützkörper 36 abgestützt werden soll (vgl. Fig. 6). Wie in Fig. 5 und Fig. 6 ebenfalls zu erkennen ist, ist der Stützkörper 36 im vorliegenden Beispiel rotationssymmetrisch zu einer Drehachse 36a ausgebildet und weist eine halbkreisförmige Wand 38 zur radialen Stützung des Rohres 2 auf, so dass unabgängig vom Hüllkreis des (im vorliegenden Fall runden) Rohres 2 eine 180°-Umschlingung gewährleistet ist. Die Stützrolle 36 ist an dem Stützschlitten 28 um die Drehachse 36a drehbar gelagert, wodurch eine Relativbewegung in Rohrlängsrichtung X zwischen dem Rohrteil 2 und dem Stützschlitten 28 ermöglicht wird, da das Rohrteil 2 bei der Drehung an der Wand 38 entlang gleiten kann.

An die halbkreisförmige Wand 38 schließt sich in vertikale Richtung ein oberer, gerader Rand 39 des Stützkörpers 36 an, um ein sicheres Drehen von Profilen mit eckigem Querschnitt im Stützkörper 36 ohne Verhaken zu gewährleisten. Außerdem dient der gerade, vertikale Rand 39 des Stützkörpers 36 zur Stabilisierung des Rohrs 2 beim Transport in Rohrlängsrichtung X, wie weiter unten näher beschrieben wird. Es versteht sich, dass der Stützkörper nicht zwingend wie in Fig. 5 und Fig. 6 gezeigt als Stützrolle 36 ausgebildet sein muss, sondern auch auf andere Weise ausgeführt sein kann.

Zum Entladen von Rohren bzw. Rohrteilen weist jeder Stützschlitten 28 bis 30 eine oder zwei Ausschleusleisten **40, 41** auf, deren (identisch gewählte) Winkelstellung im Bezug auf die Horizontale (manuell) verstellbar ist, indem ein freies Ende der Ausschleusleisten 40, 41 in einem jeweils vorgegebenen Abstand zum Grundkörper des Stützschlittens 36 festgelegt, d.h. in einem entsprechenden von mehreren auswählbare Schraublöchern eingeschraubt oder mit Hilfe eines Rastbolzens befestigt wird.

Jede Ausschleusleiste 40, 41 ist an der Oberseite mit einer Gleitschiene **42, 43** bestückt, die bei Verschleiß von der Ausschleusleiste 40, 41 abgelöst und ausgetauscht werden kann. Auch können Gleitschienen 42, 43 mit unterschiedlichen Materialien (Metall, Kunststoff, Textil) verwendet werden, um je nach Rohmaterial z.B. ein kratzerarmes Entladen zu gewährleisten. Beim Entladen von Rohrteilen werden die Stützkörper 36 vollständig in Z-Richtung abgesenkt, so dass die Rohrteile über die Ausschleusleisten 40, 41 abrollen oder abrutschen können und an die sich anschließende, schräge Entladefläche 33 verbracht werden, vor der eine definierte Übergabe an Sammelbehälter oder an Transporteinrichtungen möglich ist.

Zum Sortieren von fertig bearbeiteten Rohrteilen kann der Stützkörper 36 in eine Zwischenstellung (Z = Z₀) abgesenkt werden, wie dies in Fig. 6 dargestellt ist. In dieser Zwischenstellung Z₀ liegt das Rohrteil 2 zwar auf den Ausschleusleisten 40, 41 auf, wird aber durch den geraden Rand 39 des Stützkörpers 36 gehalten, so dass es nicht abrutschen kann. Bei einer Verfahrbewegung der Stützschlitten 28 bis 30 in Rohrlängsrichtung X kann das von diesen gestützt Rohr bzw. Rohrteil seine relative Lage zu den Stützschlitten 28 bis 30 nicht verändern, so dass es in Rohrlängsrichtung X entlang des Trägers 21 verschoben werden kann. Sobald das Rohr 2 in eine gewünschte Position entlang des Trägers 21 verbracht wurde, wird der Stützkörper 36 weiter nach unten verfahren, so dass das unterstützte Rohr bzw. Rohrteil 2 an den Ausschleusleisten 40, 41 entlang gleitet und auf die schräge Entladefläche 33 verbracht wird.

Alternativ oder zusätzlich zum Halten des Rohrs bzw. Rohrteils 2 durch den Stützkörper 36 ist es auch möglich, Halteeinrichtungen zu verwenden, welche nicht mit dem Stützkörper 36 in Verbindung stehen. Solche Halteeinrichtungen können beispielsweise (nicht gezeigte) seitlich an den Ausschleusleisten 40, 41 befestigte, in der Höhe verstellbare oder schwenkbare Haltestifte sein, die in eine Haltestellung bewegt oder geschwenkt werden, um das Rohr 2 auf den Ausschleusleisten 40, 41 zu halten. Soll das Rohr 2 ausgeschleust werden, so können die Haltestifte nach unten in eine Stellung bewegt oder geschwenkt werden, in der sie das Rohr 2 nicht mehr berühren, so dass es abrutschen oder abrollen kann.

Zusammenfassend kann auf die oben beschriebene Weise eine flexible Vorrichtung realisiert werden, bei der auf einfache Weise das Entladen von Rohren bzw. von Rohrteilen unterschiedlicher Länge und insbesondere eine Sortierung der Rohre bzw. Rohrteile ermöglicht wird.

## Patentansprüche

1. Vorrichtung, umfassend:
eine Bearbeitungsvorrichtung (4) zur Bearbeitung von Rohren (2), sowie eine Entladevorrichtung (5), **dadurch gekennzeichnet, dass** die Entladevorrichtung (5) umfasst:
einen in Rohrlängsrichtung (X) relativ zu einer Bearbeitungsstelle (F) der Bearbeitungsvorrichtung (4) verfahrbaren Ablageschlitten (24) mit einer Ablagefläche (25) zur Ablage eines Rohres (2) während und/oder nach der Bearbeitung, sowie
mindestens einen in Rohrlängsrichtung (X) relativ zu der Bearbeitungsstelle (F) verfahrbaren Stützschlitten (28 bis 30), wobei der Stützschlitten (28 bis 30) mindestens einen Stützkörper (36) für das Rohr (2) mit einer Wand (38) zur radialen Abstützung des Rohres (2) aufweist, und wobei
zumindest die Ablagefläche (25) des Ablageschlittens (24) und/oder zumindest der Stützkörper (36) des Stützschlittens (28 bis 30) in mindestens einer weiteren Richtung (Y, Z) verfahrbar ist/sind, derart, dass der Ablageschlitten (24) und der Stützschlitten (28 bis 30) in Rohrlängsrichtung (X) zumindest teilweise aneinander vorbei bewegbar sind.

2. Vorrichtung nach Anspruch 1, bei welcher der Ablageschlitten (24) und der mindestens eine Stützschlitten (28 bis 30) an Führungsschienen (22, 23) eines sich in Rohrlängsrichtung (X) erstreckenden Trägers (21) angebracht sind.

3. Vorrichtung nach Anspruch 2, bei welcher der Ablageschlitten (24) und der mindestens eine Stützschlitten (28 bis 30) an gegenüberliegenden Seiten (21a, 21b) des Trägers (21) angebracht sind.

4. Vorrichtung nach einem der vorhergehenden Ansprüche, bei welcher der Ablageschlitten einen Ausleger (26) zum Verfahren der Ablagefläche (25) des Ablageschlittens (24) quer zur Rohrlängsrichtung (X) aufweist.

5. Vorrichtung nach einem der vorhergehenden Ansprüche, bei welcher die Ablagefläche (25) des Ablageschlittens (24) höhenverstellbar ist.

6. Vorrichtung nach einem der vorhergehenden Ansprüche, bei welcher die Ablagefläche (25) des Ablageschlittens (24) prismatisch ist, derart, dass sie von einer den Scheitel der Ablagefläche (25) bildenden, sich in Rohrlängsrichtung (X) erstreckenden Kante ausgehend quer zur Rohrlängsrichtung (X) zu beiden Seiten hin ansteigt.

7. Vorrichtung nach einem der vorhergehenden Ansprüche, bei welcher die Ablagefläche (25) des Ablageschlittens (24) zwischen einer ersten Stellung zur Ablage des Rohres (2) und einer zweiten Stellung zum Ausschleusen des Rohres (2) verschwenkbar ist.

8. Vorrichtung nach einem der vorhergehenden Ansprüche, bei welcher der Stützkörper (36) des Stützschlittens (28 bis 30) höhenverstellbar ist und der Stützschlitten (28 bis 30) mindestens eine geneigte, seitlich zum Stützkörper (36) versetzte Ausschleusleiste (40, 41) aufweist.

9. Vorrichtung nach Anspruch 8, bei welcher der Stützkörper (36) in eine Zwischenstellung (Z₀) absenkbar ist, in der das Rohr (2) auf der Ausschleusleiste (40, 41) aufliegt und durch die Wand (38, 39) des Stützkörpers (36) auf der Ausschleusleiste (40, 41) gehalten wird.

10. Vorrichtung nach Anspruch 8 oder 9, bei welcher eine Winkelstellung der Ausschleusleiste (40, 41) einstellbar ist und/oder die Ausschleusleiste (40, 41) mit einer insbesondere auswechselbaren Gleitschiene (42, 43) bestückt ist.

11. Vorrichtung nach einem der vorhergehenden Ansprüche, weiter umfassend: eine geneigte Entladefläche (33), welche sich in einer Richtung (Y) quer zur Rohrlängsrichtung (X) an die Ablagefläche (25) und/oder an die Ausschleusleiste (40, 41) anschließt.

12. Verfahren zum Entladen eines Rohrs (2) mittels einer Vorrichtung nach einem der vorhergehenden Ansprüche, umfassend die Schritte:
Wahlweises Positionieren des Ablageschlittens (24) und/oder des Stützschlittens (28) im Bereich einer Bearbeitungsstelle (F) der Bearbeitungsvorrichtung (4) durch Bewegen des Ablageschlittens (24) und/oder des Stützschlittens (28 bis 30) in Rohrlängsrichtung (X), wobei zumindest die Ablagefläche (25) des Ablageschlittens (24) und/oder zumindest der Stützkörper (36) des Stützschlittens (28 bis 30) in mindestens einer weiteren Richtung (Y, Z) bewegt werden, um den Ablageschlitten (24) und den Stützschlitten (28 bis 30) in Rohrlängsrichtung (X) zumindest teilweise aneinander vorbei zu bewegen, sowie
Ablegen des Rohrs (2) auf der Ablagefläche (25) des im Bereich der Bearbeitungsstelle (F) positionierten Ablageschlittens (24) oder auf dem Stützkörper (36) des im Bereich der Bearbeitungsstelle (F) positionierten Stützschlittens (28 bis 30).

## Claims

1. Device comprising:
a processing device (4) for processing pipes (2) and also an unloading device (5), **characterized in that** the unloading device (5) comprises:
a depositing carriage (24) which can be moved in a longitudinal direction (X) of the pipe relative to a processing location (F) of the processing device (4) and which has a depositing face (25) for depositing a pipe (2) during and/or after the processing operation, and
at least one supporting carriage (28 to 30) which can be moved in the longitudinal direction (X) of the pipe relative to the processing location (F), the supporting carriage (28 to 30) having at least one supporting member (36) for the pipe (2) having a wall (38) for radially supporting the pipe (2), and wherein
at least the depositing face (25) of the depositing carriage (24) and/or at least the supporting member (36) of the supporting carriage (28 to 30) being able to be moved in at least one other direction (Y, Z) in such a manner that the depositing carriage (24) and the supporting carriage (28 to 30) can be at least partially moved past each other in the longitudinal direction (X) of the pipe.

2. Device according to claim 1, wherein the depositing carriage (24) and the at least one supporting carriage (28 to 30) are fitted to guide rails (22, 23) of a carrier (21) which extends in the longitudinal direction (X) of the pipe.

3. Device according to claim 2, wherein the depositing carriage (24) and the at least one supporting carriage (28 to 30) are fitted to opposing sides (21a, 21b) of the carrier (21).

4. Device according to any one of the preceding claims, wherein the depositing carriage has an extension arm (26) for moving the depositing face (25) of the depositing carriage (24) transversely relative to the longitudinal direction (X) of the pipe.

5. Device according to any one of the preceding claims, wherein the depositing face (25) of the depositing carriage (24) is height-adjustable.

6. Device according to any one of the preceding claims, wherein the depositing face (25) of the depositing carriage (24) is prismatic in such a manner that it rises from an edge which extends in the longitudinal direction (X) of the pipe and which forms the apex of the depositing face (25) transversely relative to the longitudinal direction (X) of the pipe towards both sides.

7. Device according to any one of the preceding claims, wherein the depositing face (25) of the depositing carriage (24) can be pivoted between a first position for depositing the pipe (2) and a second position for discharging the pipe (2).

8. Device according to any one of the preceding claims, wherein the supporting member (36) of the supporting carriage (28 to 30) is adjustable in terms of height and the supporting carriage (28 to 30) has at least one inclined discharge bar (40, 41) which is laterally offset relative to the supporting member (36).

9. Device according to claim 8, wherein the supporting member (36) can be lowered into an intermediate position (Z₀) in which the pipe (2) rests on the discharge bar (40, 41) and is retained on the discharge bar (40, 41) by the wall (38, 39) of the supporting member (36).

10. Device according to claim 8 or claim 9, wherein an angular position of the discharge bar (40, 41) can be adjusted and/or the discharge bar (40, 41) is provided with a sliding rail (42, 43) which can in particular be exchanged.

11. Device according to any one of the preceding claims, further comprising: an inclined unloading face (33) which abuts the depositing face (25) and/or the discharge bar (40, 41) in a direction (Y) transverse relative to the longitudinal direction (X) of the pipe.

12. Method for unloading a pipe (2) using a device according to any one of the preceding claims, comprising the steps of:
selectively positioning the depositing carriage (24) and/or the supporting carriage (28) in the region of a processing location (F) of the processing device (4) by moving the depositing carriage (24) and/or the supporting carriage (28 to 30) in the longitudinal direction (X) of the pipe, at least the depositing face (25) of the depositing carriage (24) and/or at least the supporting member (36) of the supporting carriage (28 to 30) being moved in at least one other direction (Y, Z) in order to move the depositing carriage (24) and the supporting carriage (28 to 30) at least partially past each other in the longitudinal direction (X) of the pipe, and
depositing the pipe (2) on the depositing face (25) of the depositing carriage (24) which is positioned in the region of the processing location (F) or on the supporting member (36) of the supporting carriage (28 to 30) which is positioned in the region of the processing location (F).

## Revendications

1. Dispositif comprenant :
un dispositif d'usinage (4) conçu pour usiner des tubes (2), ainsi qu'un dispositif d'enlèvement (5), **caractérisé par le fait que** le dispositif d'enlèvement (5) inclut :
un chariot de stockage (24) pouvant être déplacé par rapport à une zone d'usinage (F) du dispositif d'usinage (4), dans la direction longitudinale (X) des tubes, et muni d'une surface réceptrice (25) en vue de déposer un tube (2) pendant et/ou après l'usinage,
ainsi qu'au moins un chariot d'appui (28 à 30) pouvant être déplacé par rapport à ladite zone d'usinage (F) dans ladite direction longitudinale (X) des tubes, sachant que ledit chariot d'appui (28 à 30) présente au moins un corps d'appui (36) affecté au tube (2) et
pourvu d'une paroi (38) destinée à procurer un appui audit tube (2) dans le sens radial, et sachant
qu'au moins la surface réceptrice (25) du chariot de stockage (24), et/ou au moins le corps d'appui (36) du chariot d'appui (28 à 30), peu(ven)t être déplacé(e)(s) dans au moins une direction supplémentaire (Y, Z), de façon telle que ledit chariot de stockage (24) et ledit chariot d'appui (28 à 30) puissent être mus, au moins partiellement, en regard l'un de l'autre dans ladite direction longitudinale (X) des tubes.

2. Dispositif selon la revendication 1, dans lequel le chariot de stockage (24), et l'au moins un chariot d'appui (28 à 30) sont implantés sur des glissières de guidage (22, 23) d'un support (21) s'étendant dans la direction longitudinale (X) des tubes.

3. Dispositif selon la revendication 2, dans lequel le chariot de stockage (24), et l'au moins un chariot d'appui (28 à 30) sont implantés sur des côtés (21a, 21b) du support (21) qui pointent à l'opposé.

4. Dispositif selon l'une des revendications précédentes, dans lequel le chariot de stockage est doté d'une console (26) en débord, en vue du déplacement de la surface réceptrice (25) dudit chariot de stockage (24) transversalement par rapport à la direction longitudinale (X) des tubes.

5. Dispositif selon l'une des revendications précédentes, dans lequel la surface réceptrice (25) du chariot de stockage (24) est réglable en hauteur.

6. Dispositif selon l'une des revendications précédentes, dans lequel la surface réceptrice (25) du chariot de stockage (24) est prismatique, de telle sorte qu'elle décrive une pente ascendante vers les deux côtés, transversalement par rapport à la direction longitudinale (X) des tubes, à partir d'une arête qui matérialise le sommet de ladite surface réceptrice (25) et s'étend dans ladite direction longitudinale (X) des tubes.

7. Dispositif selon l'une des revendications précédentes, dans lequel la surface réceptrice (25) du chariot de stockage (24) peut pivoter entre une première position, dévolue au dépôt du tube (2), et une seconde position affectée à l'évacuation dudit tube (2).

8. Dispositif selon l'une des revendications précédentes, dans lequel le corps d'appui (36) du chariot d'appui (28 à 30) est réglable en hauteur, et ledit chariot d'appui (28 à 30) est muni d'au moins une barrette inclinée d'évacuation (40, 41) décalée, dans le sens latéral, vis-à-vis dudit corps d'appui (36).

9. Dispositif selon la revendication 8, dans lequel le corps d'appui (36) peut être abaissé jusqu'à une position intermédiaire (Zₒ) dans laquelle le tube (2) repose sur la barrette d'évacuation (40, 41) et est retenu, sur ladite barrette d'évacuation (40, 41), par la paroi (38, 39) dudit corps d'appui (36).

10. Dispositif selon la revendication 8 ou 9, dans lequel une position angulaire de la barrette d'évacuation (40, 41) peut être réglée, et/ou ladite barrette d'évacuation (40, 41) est garnie d'un rail de glissement (42, 43) notamment apte au remplacement.

11. Dispositif selon l'une des revendications précédentes, comprenant par ailleurs : une surface inclinée d'enlèvement (33) située, dans une direction (Y) transversale à la direction longitudinale (X) des tubes, dans la continuité directe de la surface réceptrice (25) et/ou de la barrette d'évacuation (40, 41).

12. Procédé d'enlèvement d'un tube (2) au moyen d'un dispositif conforme à l'une des revendications précédentes, incluant les étapes consistant :
à positionner sélectivement le chariot de stockage (24) et/ou le chariot d'appui (28) dans la région d'une zone d'usinage (F) du dispositif d'usinage (4), par mouvement imprimé audit chariot de stockage (24) et/ou audit chariot d'appui (28 à 30) dans la direction longitudinale (X) des tubes, au moins la surface réceptrice (25) dudit chariot de stockage (24), et/ou au moins le corps d'appui (36) dudit chariot d'appui (28 à 30), étant animé(e)(s) d'un mouvement dans au moins une direction supplémentaire (Y, Z) en vue de mouvoir ledit chariot de stockage (24) et ledit chariot d'appui (28 à 30) au moins partiellement en regard l'un de l'autre dans ladite direction longitudinale (X) des tubes,
ainsi qu'à déposer le tube (2) sur ladite surface réceptrice (25) dudit chariot de stockage (24) positionné dans la région de ladite zone d'usinage (F), ou sur ledit corps d'appui (36) dudit chariot d'appui (28 à 30) positionné dans ladite région de la zone d'usinage (F).
